# EUROPEAN PATENT SPECIFICATION

(11) **EP 1 679 673 B1**
(45) Date of publication and mention of the grant of the patent: **13.04.2011**
(21) Application number: 04792064.0
(22) Date of filing: 05.10.2004
(51) Int. Cl.: G01C 21/32, G07C 5/08, G08G 1/0967

(54) **METHOD AND SYSTEM FOR STORING MOTORCYCLE DRIVING INFORMATION**
VERFAHREN UND SYSTEM ZUM ABSPEICHERN VON FAHRINFORMATIONEN FÜR MOTORRÄDER
PROCEDE ET SYSTEME DE MEMORISER D'INFORMATION DE CONDUIRE POUR MOTOCYCLETTE

(30) Priority: 20.10.2003 JP 2003359808
(43) Date of publication of application: 12.07.2006
(73) Proprietor: Yamaha Hatsudoki Kabushiki Kaisha, Iwata-shi, Shizuoka 438-8501 (JP)
(72) Inventor: UCHIDA, Y., Yamaha Hatsudoki Kabushiki Kaisha, Shizuoka 4388501 (JP); SASAKI, K., Yamaha Hatsudoki Kabushiki Kaisha, Shizuoka 4388501 (JP)
(74) Representative: Grünecker, Kinkeldey, Stockmair & Schwanhäusser Anwaltssozietät
(86) International application number: PCT/JP2004/014653
(87) International publication number: WO 2005/038745

(56) References cited:
- JP-A- 2000 182 197
- JP-A- 2002 140 800
- JP-A- 2002 150 468
- JP-A- 2002 170 188
- JP-A- 2002 353 299
- US-A- 3 680 043

## Description

### [Technical Field]

The present invention relates to a method for storing motorcycle driving information and, particularly, to a method for storing driving information for supporting motorcycle driving. The present invention also relates to a system for storing motorcycle driving information and to a motorcycle having the system.

### [Background Art]

In order to support motorcycle driving, motorcycle information providing systems have been proposed which give riders necessary warnings depending on the conditions of roads and vehicles, one of which is disclosed in Patent Document 1.

The information providing system disclosed in Patent Document 1 starts to extract road information acquired through communication and vehicle information (for example, vehicle speed V) detected by various sensors. The electrical control unit (ECU) calculates the bank angle θ of a vehicle by equation θ = tan⁻¹ (V²/ (g·R)) using the vehicle speed V, curve radius R, and gravitational acceleration g and then determines how large the acquired bank angle θ is.

In the case of θ < 10°, lamp number LNUM is set to 1 (blue) to light on a blue LED lamp; when bank angle θ is expressed as 10° ≤ θ < 20°, the lamp number LNUM is set to 2 (yellow) and voice signal VoiceN is set to 1 ("blip, caution!"). In the case of 20° ≤ θ, the lamp number LNUM is set to 3 (red) and the voice signal VoiceN is set to 2 ("beep, danger") and a rear brake lamp is lit on; and when 10° ≤ θ, the vehicle speed V is determined and, depending on the vehicle speed V, the respective flashing intervals of the colors (yellow and red), the length and volume of the voice signals are set.

As has been described, riders are automatically given necessary warnings depending on the conditions of roads and vehicles at a specified timing. Accordingly, riders can drive vehicles correctly at all times. This reduces a load on the driving of riders.
[Patent Document 1] JP-A-2002-140800

### [Disclosure of the Invention]

### [Problems that the Invention is to Solve]

In Patent Document 1, bank angle θ is calculated, depending on which, necessary warnings are given to riders. However, since the bank angles of motorcycles depend greatly on other conditions (e.g., curve curvature and the skill of riders), only determination of the bank angle θ may often be of no practical use. Particularly, providing information on a standard bank limit (optimum bank angle) may be of no use, because it is easy setting for skilled riders, which would not lead to appropriate driving support.
A further prior art document JP 2002-353299 A teaches a curve entering speed control for an automobile, wherein a navigation system is provided for searching present position of the automobile and an estimated bank angle is calculated for a curved route when the automobile passes same. The estimated bank angle and the coordinate position information are stored when the estimated bank angle is a prescribed value or more. On the basis of the estimated bank angle and the curvature information, an upper limit curve entering speed is calculated and used when the automobile passes the curved route the next time. In this document, the estimated bank angle relates to the curved route.

The present invention has been made in consideration of the above problems. Accordingly, it is an object of the invention to provide a method for storing motorcycle driving information capable of storing appropriate bank angles to support motorcycle driving. It is another object of the invention to provide a device (or system) for storing motorcycle driving information suitable for achieving the method for storing driving information and a motorcycle equipped with the system.

According to the present invention said object is solved by a method for storing motorcycle driving information having the features of independent claim 1. Preferred embodiments are laid down in the dependent claims.

According to the present invention said object is also solved by a device for storing motorcycle driving information having the features of independent claim 13. Preferred embodiments are laid down in the dependent claim.

A method for storing motorcycle driving information according to the present invention includes the step (a) of acquiring motorcycle coordinate data; the step (b) of calculating left and right bank angles of the motorcycle; and the step (c) of storing the coordinate data and the left and right bank angles in a linked manner.

Preferably, the step (a) is performed using a global positioning system (GPS).

In a preferred embodiment, the step (a) further includes the step of producing a drive map including the driving route of the motorcycle using the acquired coordinate data; and the step of calculating the curve curvature of the driving route from the drive map.

Preferably, the method further includes the step of classifying the curve curvature into a plurality of groups; wherein the step (c) includes the step of storing the left and right bank angles linked to each of the groups of the curve curvature.

In a preferred embodiment, the curve curvature is classified into groups in the unit of a curve curvature of 50 meters.

Preferably, the left and right bank angles are stored such that the left bank angle and the right bank angle are separately linked to each of the groups of the curve curvature.

Preferably, the step (c) includes the step of storing the speed, acceleration, and deceleration of the motorcycle linked to the coordinate data, in addition to the left and right bank angles.

In a preferred embodiment, the steps (a) to (c) are performed for each of different riders.

In a preferred embodiment, the different riders include a single first rider and the first rider who rides double on the motorcycle.

Preferably, the steps (a) to (c) are performed for each of different road surfaces.

In a preferred embodiment, the coordinate data and the bank angles are stored at specified time intervals.

Image data during motorcycle driving may be recorded using an imaging device.

A system for storing motorcycle driving information according to the invention includes: a coordinate determination unit for acquiring coordinate data of a motorcycle; a sensor for determining the left and right bank angles of the motorcycle; a controller connected to the coordinate determination unit and the sensor; and a storage section for storing data processed by the controller. The controller has: a function of calculating left and light bank angles on the basis of the information from the sensor; and
a function of outputting the left and right bank angles linked to the coordinate data of the motorcycle acquired by the coordinate determination unit to the storage section.

Preferably, the coordinate determination unit is a GPS receiver for receiving a GPS signal.

In a preferred embodiment, the controller has a function of producing a drive map including the driving route of the motorcycle using the coordinate data; and a function of calculating the curve curvature of the driving route from the drive map.

In a preferred embodiment, the sensor includes a vehicle-speed sensor and a yaw-rate sensor.

A motorcycle according to the invention includes the aforesaid motorcycle driving-information storing system.

In a preferred embodiment, the motorcycle further includes an imaging device connected to the controller.

A system for displaying motorcycle driving information according to an embodiment of the invention includes a sensor for sensing the driving condition of a vehicle; data processing means for acquiring data related to driving characteristic values including at least one of left and right bank angles, acceleration and deceleration values, a vehicle speed, and acceleration and deceleration points of the vehicle from the sensor output and sequentially recording the values of the data at each predetermined time to store the history of the data; and display processing means for performing information processing for displaying the driving characteristic values corresponding to the result of driving on display means on the basis of the stored data.

According to an embodiment, the result of driving is the driving route of the vehicle or the curvature of a curve of the driving route of the vehicle.

According to an embodiment, the display processing means is constructed to display the driving characteristic values along the driving route.

According to an embodiment, the display processing means is constructed to display the driving route in such a manner that it is superimposed on map data.

According to an embodiment, the display processing means is constructed to display the driving characteristic values on the display means such that they are adjacent to comparative driving characteristic values.

According to an embodiment, the comparative driving characteristic values can be stored in a storage region of the display processing means from an external database via communication means.

According to an embodiment, the comparative driving characteristic values are the standard values, the past limit values of driving of an identical driver, or the limit values of driving of another driver.

According to an embodiment, the data processing means is constructed to acquire a driving route from coordinate data corresponding to the vehicle carriage way.

According to an embodiment, the coordinate data is acquired from a global positioning system (GPS).

A system for displaying motorcycle driving information according to an embodiment of the invention includes processing means for transmitting information to a motorcycle rider and display means for displaying process results. The information-transmission processing means sequentially stores information outputted from an on-vehicle sensor into a memory and produces a memory map of the left and right bank angles for the driving route of a vehicle and, on the basis of the map data, displays the bank angle of the driving route on display means for the rider.

According to an embodiment, the bank angle is a bank angle limit depending on the driving ability of the rider.

According to an embodiment, the memory map includes a memory region for a bank angle relative to the curve curvature of the driving route.

According to an embodiment, the memory map includes a memory region for a bank angle relative to the coordinate data of the driving route.

According to an embodiment, the information-transmission processing means compares the present bank angle of the vehicle and a corresponding bank angle on the memory map and, from the result of comparison, updates the corresponding bank angle to the latest bank angle and stores it.

According to an embodiment, when the latest bank angle exceeds the corresponding physical bank angle limit of the carriage way, the information-transmission processing means does not update the corresponding bank angle on the memory map or updates the corresponding bank angle in the range lower than the physical bank angle.

According to an embodiment, when the latest bank angle is close to the bank angle limit, the information-transmission processing means displays a warning on the display means.

According to an embodiment, the bank angle limit is corrected according to at least one of the condition of the road surface, the state of weather, and the requirement of the driver.

According to an embodiment, the bank angle limit is set according to on-vehicle map data.

According to an embodiment, the bank angle limit is set in the information-transmission processing means via communication means from an external database.

According to an embodiment, the correction parameter can be set in the information-transmission processing means with an on-vehicle switch.

According to an embodiment, the correction parameter is set in the database and can be set in the information-transmission processing means via the communication means.

According to an embodiment, the memory map can be set in the database via communication means.

According to an embodiment, the maximum vehicle speed for the carriage way is set in the memory map.

According to an embodiment, a bank angle limit for each corner of the carriage way is set in the memory map.

A system for displaying motorcycle driving information according to an embodiment of the invention includes processing means for transmitting information to a motorcycle driver and display means for displaying process results. The information-transmission processing means sequentially stores information outputted from an on-vehicle sensor into a memory and produces a memory map of limit values for the driving route of a vehicle and, on the basis of the map data, displays the limit values of the driving route on display means for the rider.

According to an embodiment, when the measured values exceed the limit values, the limit values are updated to the measured values and stored.

According to an embodiment, the limit values for the driving route are stored for each carriage way.

According to an embodiment, the limit values for the driving route are stored for each rider.

According to an embodiment, the limit values include at least one of the maximum values of vehicle speed, bank angle, deceleration, and acceleration of a curved road.

According to an embodiment, a plurality of limit values is stored for the identical driving route in the memory map.

According to an embodiment, the information-transmission processing means has the function of editing data stored in the memory map.

According to an embodiment, the data stored in the memory map can be edited by an external information processing unit.

According to an embodiment, the system further includes means capable of editing a plurality of stored data for the identical driving route to set the optimum value.

A method for providing motorcycle information according to the invention, during the driving of the motorcycle includes: storing a bank angle in a memory continuously at predetermined intervals; determining driving ability from the stored bank angles; determining a bank angle depending on the driving ability; determining speed limit depending on the driving ability from the curve radius, the bank angle, and the bank limit of the vehicle; and when the vehicle is not decelerated to the speed limit before arrival to a curve, giving a warning to the rider.

According to an embodiment, the speed limit is corrected according to at least one of the condition of the carriage way, the condition of the vehicle, and the condition of the road surface.

According to an embodiment, the condition of the vehicle includes the air pressure of wheels.

A system for displaying motorcycle information according to an embodiment of the invention includes processing means for transmitting information to a motorcycle driver and display means for displaying process results. The information-transmission processing means includes a memory map in which the limit values of the carriage way of a vehicle are stored.

According to an embodiment, the limit value is a bank angle limit.

According to an embodiment, the condition of the vehicle includes the air pressure of wheels.

A system for displaying motorcycle information according to an embodiment of the invention includes processing means for transmitting information to a motorcycle driver and display means for displaying process results. The information-transmission processing means continuously acquires the driving state of the vehicle on a carriage way, acquires the maximum driving characteristic on the carriage way, and produces a memory map in which the limit value corresponds to the carriage way.

According to an embodiment, the limit value is a bank angle limit or a speed limit.

A system for displaying motorcycle information according to an embodiment of the invention includes processing means for transmitting information to a motorcycle rider and display means for displaying process results. The information-transmission processing means executes the steps of reading parameters; reading the limit values of the rider from an external memory medium; and when actual measured values exceed the limit values, rewriting the limit values to the actual measure values and registering them into an external memory.

A system for displaying motorcycle information according to an embodiment of the invention includes processing means for transmitting information to a motorcycle rider and display means for displaying process results. The information-transmission processing means executes a first step of reading parameters; a second step of reading the limit values of the rider from an external memory; and when the actual measured values exceed the limit values, a third step of rewriting the limit values to the actual measure values and registering them into an external memory.

According to an embodiment, the information-transmission processing means reads the speed limit of a corner from the external memory, wherein when the actual measured value exceeds the speed limit, executes the third step.

A system for displaying motorcycle information according to an embodiment of the invention includes processing means for transmitting information to a motorcycle rider and display means for displaying process results. The information-transmission processing means reads the memory map of the bank angle limit of the rider for the corner of the route, acquires a speed limit from the bank angle limit, compares the speed limit with the actual measured speed, and displays the comparison result on the display means.

A program according to an embodiment of the invention is a program for an on-vehicle microcomputer for controlling a motorcycle to execute the above-described means.

A storage medium according to an embodiment of the invention is a memory medium in which the above program is stored.

### [Advantages of the Invention]

By the method for storing motorcycle driving information according to the invention, after coordinate data of a motorcycle has been acquired and left and right bank angles of the motorcycle have been calculated, the coordinate data and the left and right bank angles are stored in a linked manner. Thus, bank angles suitable for supporting motorcycle driving can be stored.

Furthermore, when producing a drive map including a motorcycle driving route using the acquired coordinate data and calculating the curve curvature of the driving route from the drive map, appropriate bank angles can be stored on the basis of a curve curvature suitable for driving the motorcycle. Also, after the curve curvature is classified into multiple groups (e.g., groups classified by the unit of a curve curvature of 50 meters), and then the left and right bank angles can be stored in each of the groups of the curve curvature in a linked manner.

### [Brief Description of the Drawings]

### [Fig. 1]

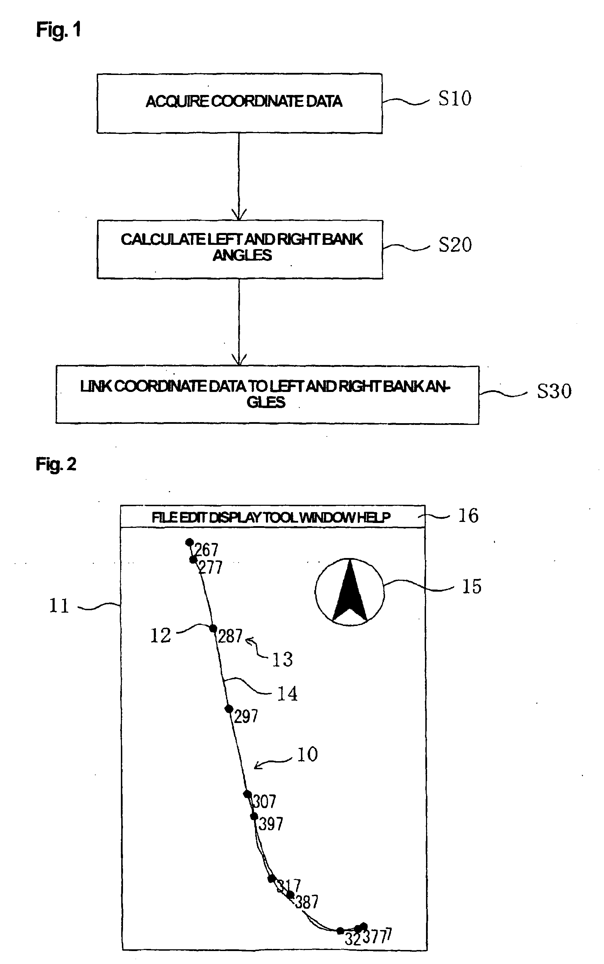

Fig. 1 is a flowchart for explaining a method for storing driving information according to an embodiment of the present invention.

### [Fig. 2]

Fig. 2 is a diagram for explaining the process of producing a drive map 10 including a driving route 14 of a motorcycle.

### [Fig. 3]

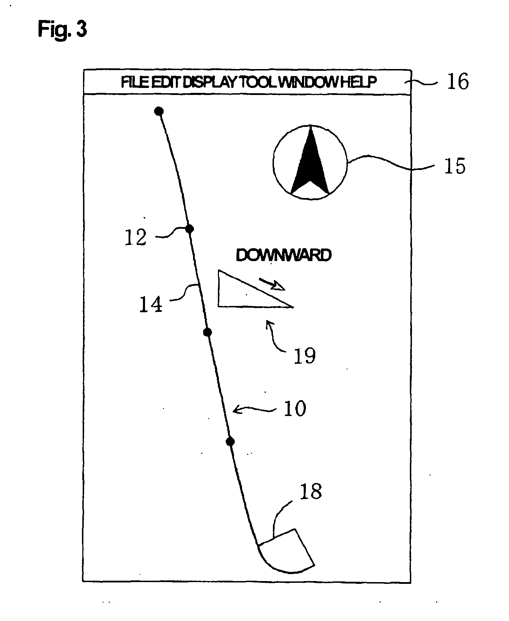

Fig. 3 is a diagram for explaining the process of calculating a curve curvature 18 of the driving route from the drive map 10.

### [Fig. 4]

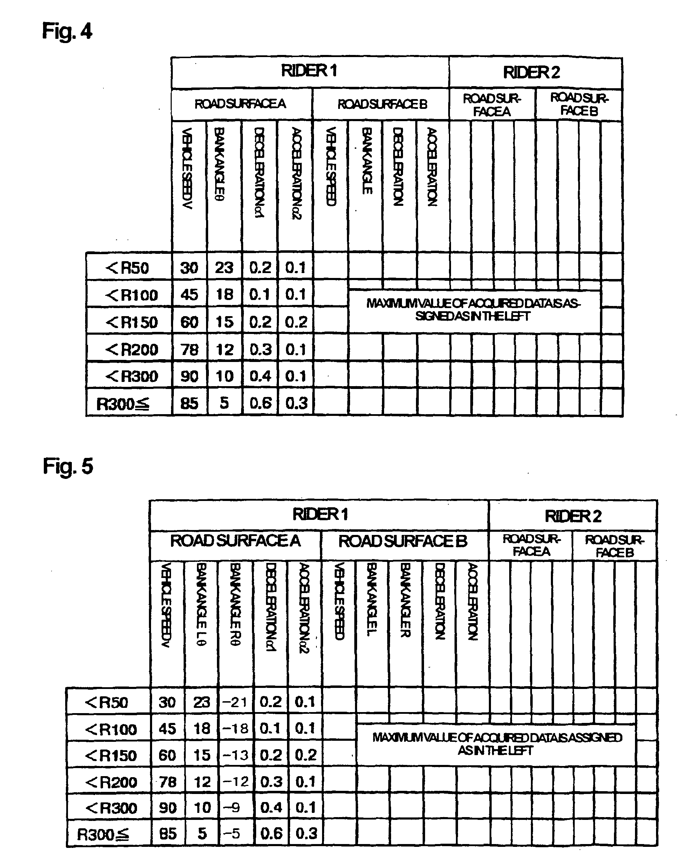

Fig. 4 is a diagram (table) in which curve curvature is classified into several groups, in which left and right bank angles are stored.

### [Fig. 5]

Fig. 5 is a diagram (table) in which curve curvature is classified into several groups, in which left and right bank angles are stored.

### [Fig. 6]

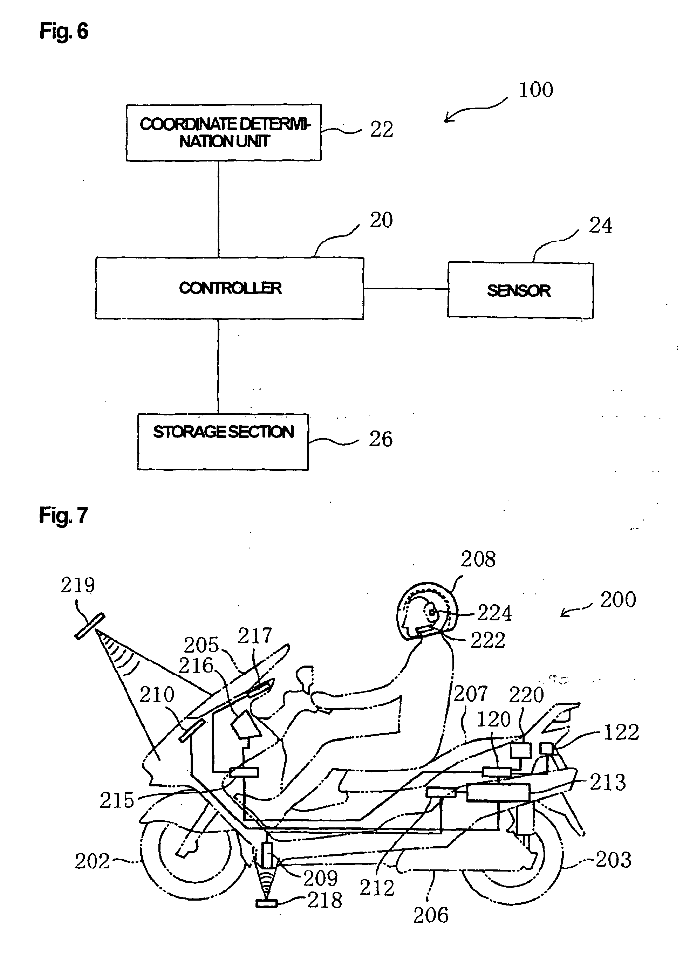

Fig. 6 is a block diagram showing the configuration of a system for storing motorcycle driving information according to an embodiment of the present invention.

### [Fig. 7]

Fig. 7 is a schematic side view of a motorcycle 200 including the system for storing motorcycle driving information according to an embodiment of the present invention.

### [Fig. 8]

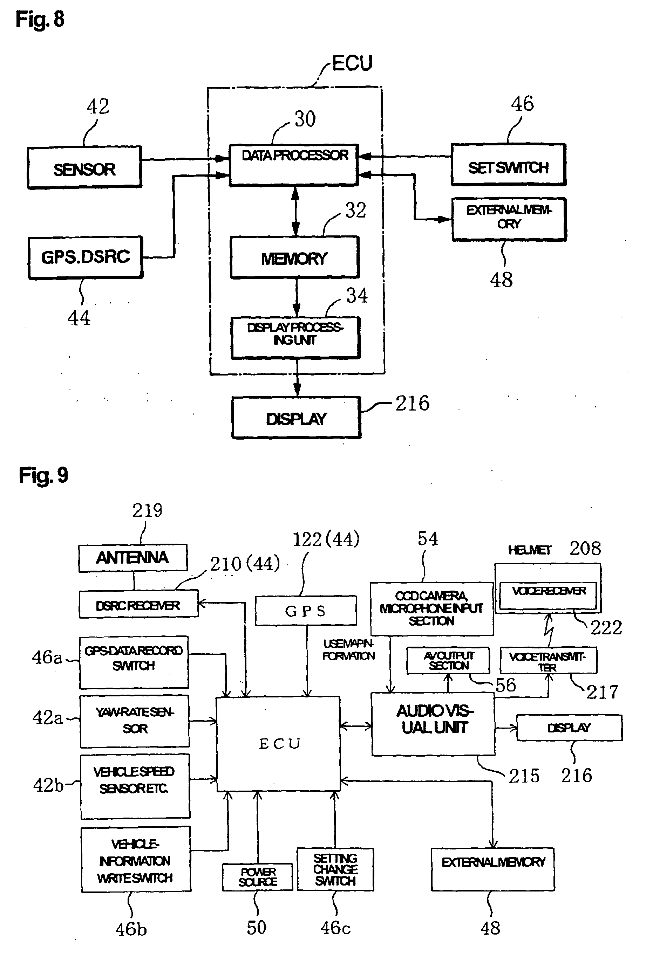

Fig. 8 is a block diagram of a motorcycle driving-information storing system 100 according to an embodiment of the present invention.

### [Fig. 9]

Fig. 9 is a block diagram of the motorcycle driving-information storing system 100.

### [Fig. 10]

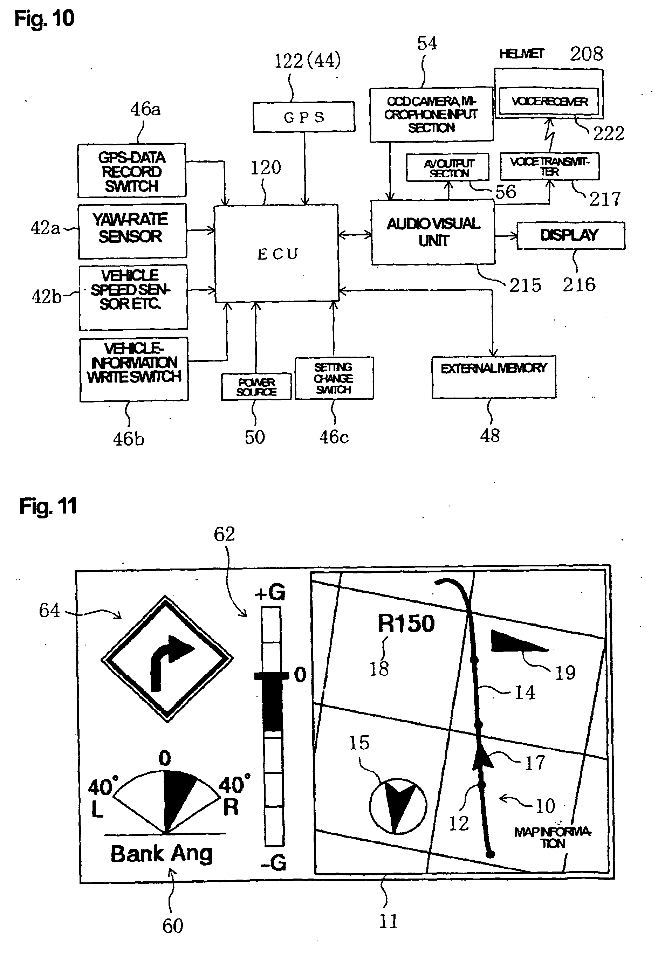

Fig. 10 is a block diagram of the motorcycle driving-information storing system 100.

### [Fig. 11]

Fig. 11 is a diagram showing a display example of an integration of bank angle data, acceleration data, etc.

### [Fig. 12]

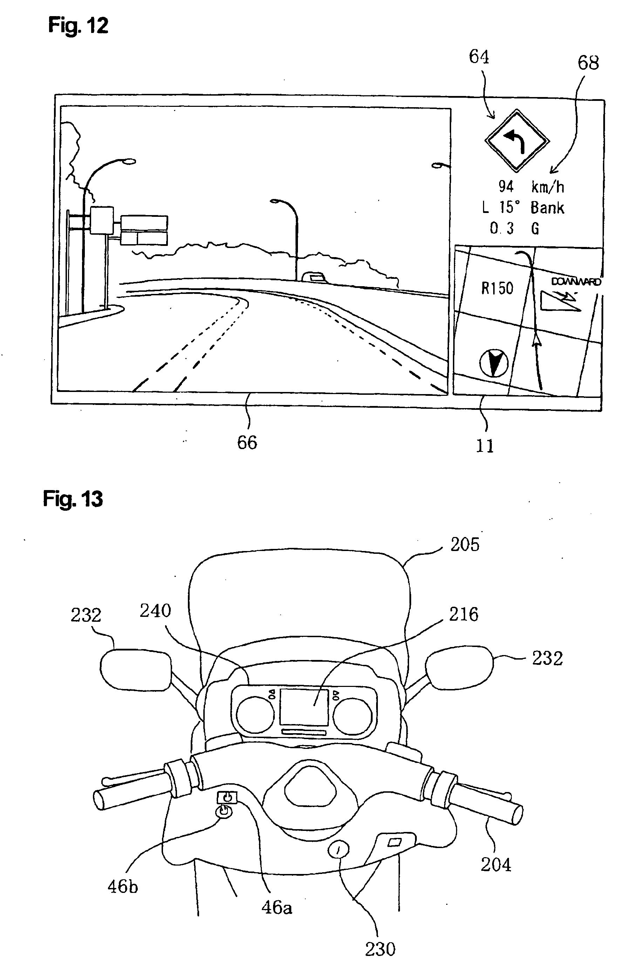

Fig. 12 is a diagram showing a display example in which a camera window 66, a map information window 11, etc. are combined.

### [Fig. 13]

Fig. 13 is a structural diagram of the periphery of a handle and a monitor as viewed from a rider.

### [Fig. 14]

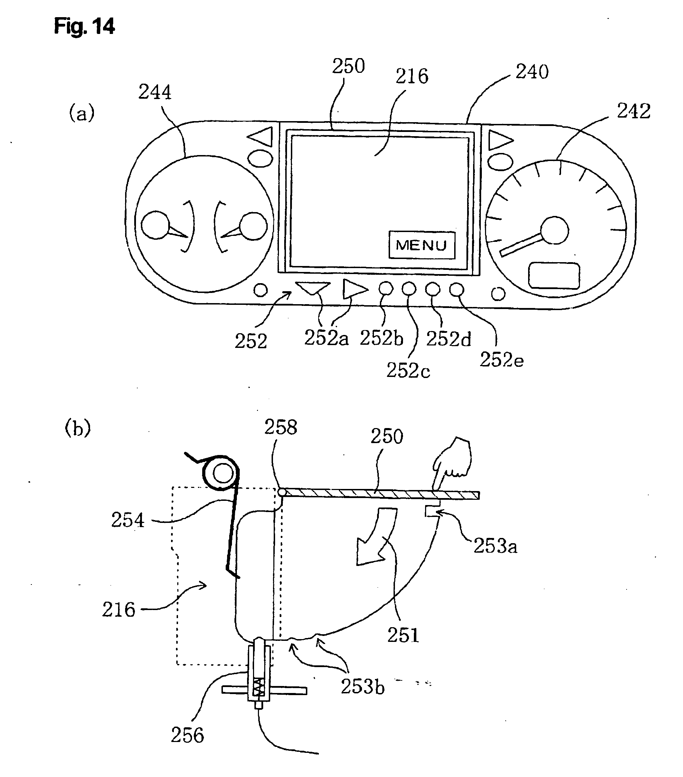

Fig. 14(a) is a front view showing the structure of a display 216; and Fig. 14 (b) is a side sectional view thereof.

### [Fig. 15]

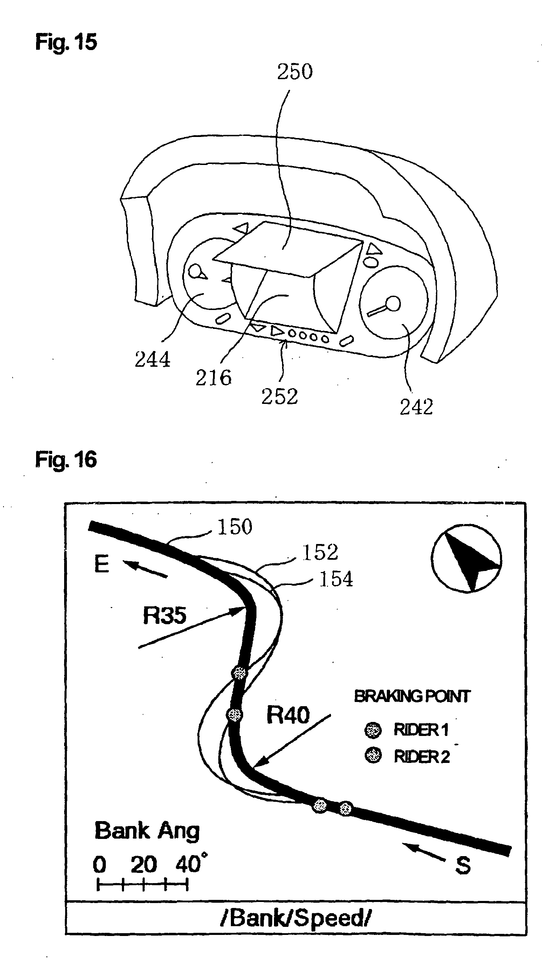

Fig. 15 is a perspective view showing the structure of the display 216 and its periphery.

### [Fig. 16]

Fig. 16 is a diagram showing left and right bank angles superimposed on the image of a carriage way continuously.

### [Fig. 17]

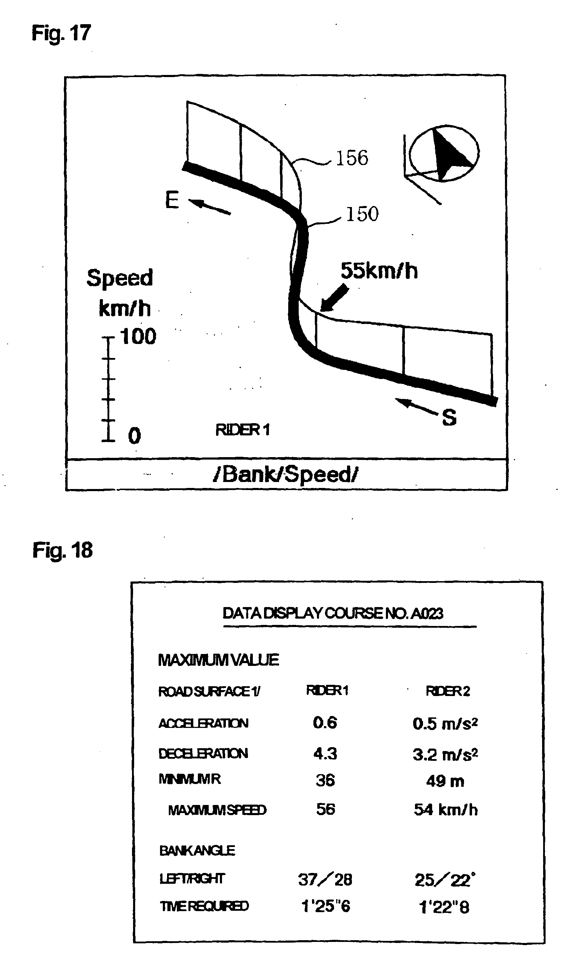

Fig. 17 is a diagram of an image in which vehicle speed is superimposed on the carriage way of a vehicle.

### [Fig. 18]

Fig. 18 is a diagram of a screen example showing driving characteristics of a course.

### [Fig. 19]

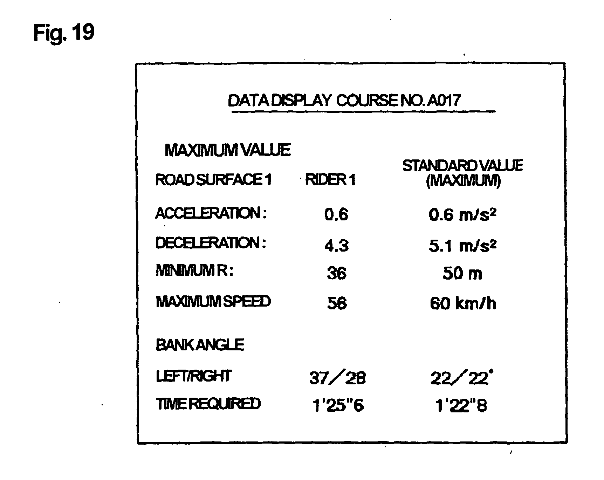

Fig. 19 is a diagram of a screen example showing driving characteristics of another course.

### [Fig. 20]

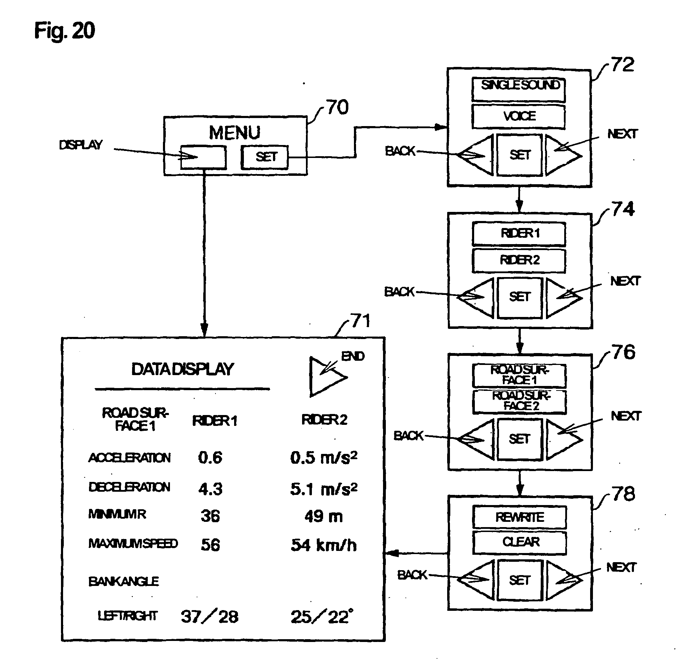

Fig. 20 is a diagram for explaining the setting of various parameters to display data.

### [Fig. 21]

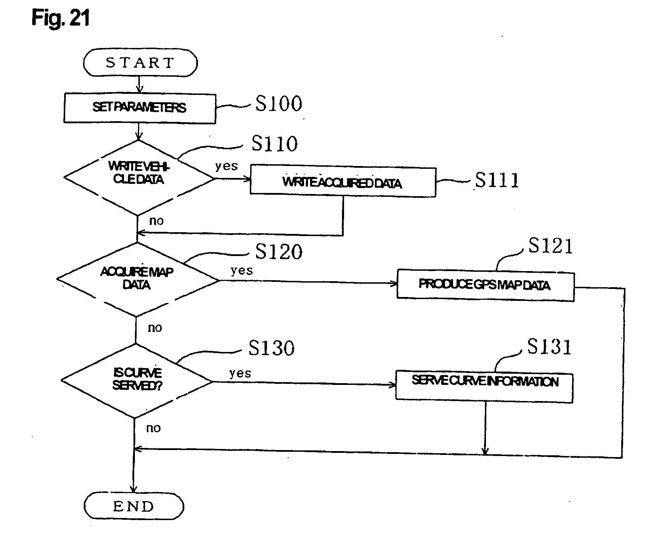

Fig. 21 is a flowchart for explaining a flow including a method for storing motorcycle driving information according to an embodiment of the invention.

### [Fig. 22]

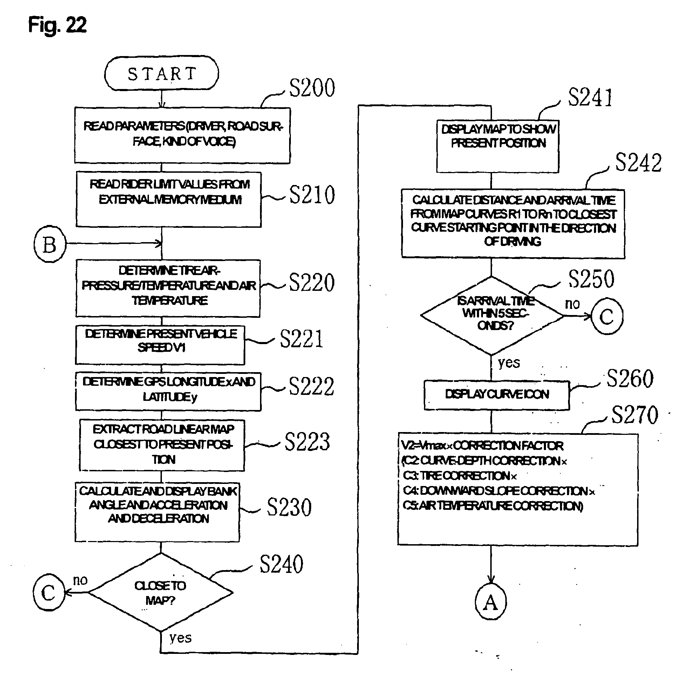

Fig. 22 is a flowchart for explaining the flow including a method for storing motorcycle driving information according to the embodiment of the invention.

### [Fig. 23]

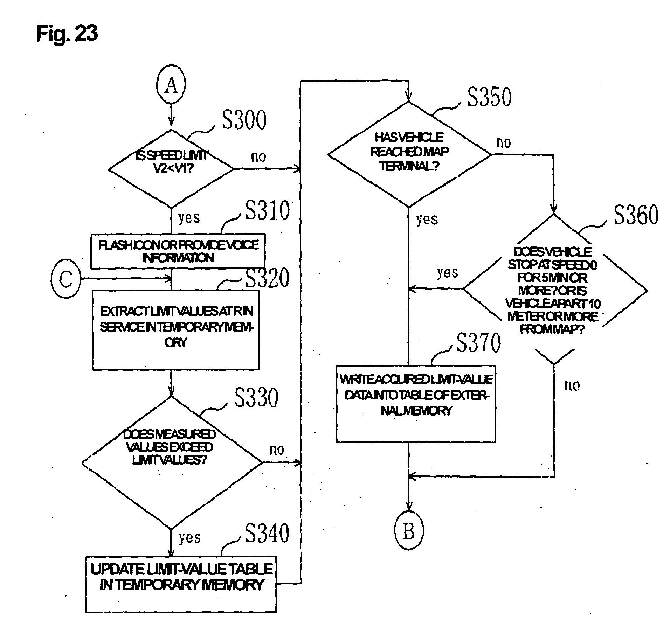

Fig. 23 is a flowchart for explaining the flow including a method for storing motorcycle driving information according to the embodiment of the invention.

### [Description of Numerals]

- 11:: map information window
- 12:: coordinate data
- 13:: acquisition number
- 14:: driving route
- 15:: bearing mark
- 16:: window bar
- 17:: vehicle position
- 18:: curve curvature
- 19:: slope information
- 20:: controller
- 22:: coordinate determination unit
- 24:: sensor
- 26:: storage section
- 30:: data processor
- 32:: memory
- 34:: display processing unit
- 42:: sensor
- 46:: set switch
- 48:: external memory
- 50:: power source
- 54:: camera/microphone input section
- 56:: output section
- 60:: bank angle indication
- 62:: deceleration indication
- 64:: curve icon
- 66:: camera window
- 70:: screen
- 100:: motorcycle driving-information storing system
- 122:: receiver
- 200:: motorcycle (scooter motorcycle)
- 202:: front wheel
- 203:: rear wheel
- 204:: handle
- 205:: screen
- 206:: unit swing engine
- 207:: seat
- 208:: helmet
- 209:: antenna
- 210:: DSRC antenna (DSRC receiver)
- 212:: detector
- 213:: DSRC receiver
- 215:: audio visual circuit
- 215:: voice unit
- 216:: display (liquid crystal display)
- 217:: voice transmitter and receiver
- 218:: read-side marker
- 219:: road-side antenna
- 220:: navigation system
- 222:: voice receiver
- 224:: speaker (voice output means)
- 230:: main switch
- 232:: side mirror
- 240:: meter unit
- 242:: speedometer
- 244:: oil temperature sensor
- 250:: shade
- 252:: switch (button switch)
- 254:: spring
- 256:: stopper

The inventor of the present application has made the present invention in consideration of that, in order to store appropriate bank angles to support motorcycle driving, it is useful for riders not only to store bank angles mechanically but also to combine them with coordinate data (particularly, data on curves with specified curvature).

Embodiments of the present invention will be described hereinbelow with reference to the drawings. In the following drawings, components having substantially the same function are indicated by the same reference numerals for ease of explanation. It is to be understood that the present invention is not limited to the following embodiments.

Referring to Fig. 1, a method for storing motorcycle driving information (a motorcycle driving-information storing method) according to an embodiment of the invention will be described. Fig. 1 is a flowchart for explaining the motorcycle driving-information storing method according to the embodiment.

In the method for storing motorcycle driving information according to the embodiment, the step of acquiring the coordinate data of a motorcycle (S10) and the step of calculating the left and right bank angles of the motorcycle (S20) are first executed. Either the acquisition of coordinate data (S10) or the calculation of left and right bank angles (S20) may be executed first or, alternatively, both of them may be executed at the same time. Then the coordinate data and the left and right bank angles are linked to each other and stored (S30).

In this embodiment, the step (S10) of acquiring coordinate data of a motorcycle is performed by acquiring position data of the vehicle using a global positioning system (GPS). The GPS is a system for specifying the latitude and longitude of the place where the driver is now from the arrival time of signals transmitted from satellites that revolve orbits around the earth. The system uses triangulation from satellites and requires more than four satellites to specify an accurate position. In order to correct the error of the GPS to reduce it, it is preferable to acquire high-accuracy position data using a differential GPS service (positional information correction service).

In this embodiment, in acquiring coordinate data (S10), the step of producing a drive map including a motorcycle driving route using the coordinate data acquired by the GPS and the step of calculating curve curvature of the driving route from the drive map are performed. Fig. 2 is a diagram for explaining the process of producing a drive map 10 including a driving route 14 of the motorcycle. Fig. 3 is a diagram for explaining the process of calculating the curve curvature 18 of the driving route from the drive map 10.

During the driving of a motorcycle, GPS coordinate data 12 is acquired at specified intervals (e.g., every 100 ms), and their nodes are connected to one another in time sequence (or in order of the acquisition number 13 of the GPS coordinate data 12), as shown in Fig. 2. Then the motorcycle driving route 14 is acquired and as such, the drive map 10 including the driving route 14 is produced.

In the example of Fig. 2, the GPS coordinate data 12 which is given specified acquisition numbers 13 is displayed in a window screen 11, in which a bearing mark 15 and an window bar 16 for editing images are disposed.

When the points (nodes) 12 of the drive map 10 in Fig. 2 are corrected by image processing to smooth the driving route 14, then the drive map 10 shown in Fig. 3 is acquired. The curve curvature 18 can be obtained from the driving route 14 of the drive map 10. Slope information (downward slope in this example) 19 can also be displayed, since information on upward slope and downward slope can also be acquired from the GPS coordinate data 12.

Since the driving route 14 is one that a motorcycle has run actually, the curve curvature 18 of the driving route 14 is more accurate than that obtained from an electronic map used in a navigation system. It is of great technical value by itself that the curve curvature can be obtained automatically by the method of the embodiment, because many electronic maps include no accurate data on curve curvature. The curve curvature 18 based on the drive map 10 reflects the driving characteristics of motorcycles. Specifically, for four-wheel cars such as passenger cars, the difference between the curve curvature which is roughly estimated from an electronic map and an actual curve curvature is not a significant problem in consideration of the relationship between the breadths of a car and a road; for motorcycles, the curve curvature differs depending on the actual driving route. Accordingly, providing the curve curvature 18 that reflects the motorcycle driving characteristics has a significant technical meaning.

In the calculation of the left and right bank angles (S20), the bank angle θ of the vehicle can be determined by equation θ tan⁻¹(V²/(g·R), where V is a vehicle speed determined by a vehicle-speed sensor, R is a curve radius determined by a yaw-rate sensor, and g is gravitational acceleration. The bank angle θ can also be determined from equation θ = tan⁻¹(V·ω/g), where ω is a yaw rate. The bank angle θ can also be determined using a first acceleration sensor with the direction of sensing as the left and right, in which case the bank angle θ can be determined from equation G = g·cosθ, where G is acceleration determined by the first acceleration sensor.

In this embodiment, the curve curvatures 18 determined from the coordinate data 12 are classified into multiple groups, to which the left and right bank angles calculated in the step S20 are linked and stored for each group. Specifically, the curve curvatures 18 can be classified by a group in the unit of a curve curvature of 50 m.

It is for the following reason that the curve curvature of this embodiment is classified by the group in the unit of 50 meters. When three points that constitute a curve get out of position by ten meters, the curvature changes greatly, so that fine classification of the curve curvature may have no significant meaning in consideration of the present GPS accuracy of about ten meters. It is empirically known that riders cannot recognize finely classified curvature in view of the recognition ability of riders during driving, so that fine classification of curvature has no significant meaning. Thus classification by about 50 meters may be appropriate.

Fig. 4 shows an example in which curve curvature is classified into multiple groups, in which left and right bank angles are stored. Fig. 4 is a display example of data in which the group with specified curvatures and the bank angles 9 are linked to one another. The curve-curvature group is classified into < R50 (less than R50 m), < R100 (R50 m or more and less than R100 m), < R150 (R100 m or more and less than R150 m), < R200 (R150 m or more and less than R200 m), < R300 (R200 m or more and less than R300 m), and R300 ≤ (R300 m or more), in each of which bank angle θ is linked and stored. The group of R200 or more has multiple units of 50 meters (50 m x 2 in this example), and the group of R300 or more is a group of all units of 50 meters.

In the display example of Fig. 4, the maximum bank angle θ is displayed in each curvature group. From the stored data, it can be grasped how much a motorcycle can be banked at a curve with a specified curvature. In this embodiment, in addition to the curve curvature and the bank angle θ, the speed (V) of the motorcycle, deceleration (α1), and acceleration (α2) are also linked thereto. These items indicate the maximum values of each curvature group.

The bank angle θ and other items (vehicle speed V etc.) can be stored for each of different road surfaces. In the example of Fig. 4, the items can be stored in each of a road surface A and a road surface B. For example, the road surface A can be dry, while the road surface can be wet. The road surface can be classified more finely into, e.g., an asphalt road, a dirt road, a rainy road, a snowy road, and a frozen road.

Furthermore, the items can be stored for each of different riders. In the example of Fig. 4, they are stored for the rider 1 and the rider 2. The rider 1 and the rider 2 are different persons typically; however, even when the rider of the motorcycle is the same person, the items may be stored for the rider 1 and the rider 2. For example, the items can be stored for a solo rider and for a rider who rides double on a motorcycle.

In addition, the bank angle θ can be stored such that it is divided into the left bank angle and the right bank angle. Fig. 5 shows an example in which the bank angle θ is divided into the left bank angle L and the right bank angle R. This is because some riders are good at or bad at between the left bank and the right bank and so, the left and right bank angles are stored individually.

Referring then to Fig. 6, a system for storing the above-described motorcycle driving information will be described. Fig. 6 is a block diagram showing the configuration of the system for storing motorcycle driving information according to this embodiment.

The motorcycle driving-information storing system 100 shown in Fig. 6 includes a coordinate determination unit 22 for acquiring the coordinate data of a motorcycle, a sensor 24 for determining the left and right bank angle 9 of the motorcycle, and a controller 20 connected to the coordinate determination unit 22 and the sensor 24. The controller 20 connects to a storage section 26. The storage section 26 can store data processed by the controller 20.

The controller 20 has the function of calculating the left and right bank angles θ from the information from the sensor 24. The controller 20 also has the function of linking the coordinate data acquired by the coordinate determination unit 22 and the left and right bank angles θ and outputting it to the storage section 26. The coordinate data may be data on the points of a curve with a specified curvature.

In consideration of the environment of infrastructure, it is desirable and convenient to use a GPS receiver that receives GPS signals as the coordinate determination unit 22 for acquiring coordinate data. In addition to the GPS receiver, the coordinate determination unit 22 for acquiring coordinate data may be others. For example, receivers of cellular phone communication, wireless LAN communication, and road-car communication can be used to determine the coordinate position, if infrastructure has been built well.

In addition, an image recognition unit can be used as the coordinate determination unit 22. For example, courses or points can be identified with white lines or surrounding buildings and as such, the coordinates can be determined. The presence of a sign or mark serving as the base point will further facilitate identification. For a direct road, only when the starting position is determined, the position on the map can be roughly determined by rough estimation. Furthermore, at which position of the corner the vehicle is can be easily estimated from a yaw rate. The coordinate position can also be determined such that a rider inputs the base position with switch by himself.

The sensor 24 for determining the bank angle θ according to the embodiment includes a yaw-rate sensor for determining the speed at which the motorcycle yaws (yaw rate) and a speed sensor for measuring the speed of the motorcycle (vehicle speed). From the yaw rate and the vehicle speed, the controller 20 calculates the bank angle θ. As has been described, the bank angle θ can also be determined from the values of other sensors (e.g., acceleration sensor).

The coordinate data and the bank angle θ are acquired at specified intervals and stored in the storage section 26. Connecting an image display section (not shown) to the controller 20 allows the stored data to be displayed. When the storage section 26 is an external memory device (for example, a flash memory) (or when an external memory device is mounted to the controller 20 along with the storage section 26), the external memory device which stores the data may be connected to a computer (e.g., PC) to allow the data to be displayed on the monitor of the computer. When the controller 20 has a communication function, the data in the storage section 26 can be extracted via a communication line.

The controller 20 is constituted by an electronic control unit (hereinafter, referred to as an ECU). The controller 20 according to the embodiment also has the function of producing the drive map 10 including the motorcycle driving route 14 with the coordinate data 12 and the function of calculating the curve curvature 18 of the driving route from the drive map 10 so as to execute the process shown in Figs. 2 and 3.

Since, in this embodiment, data of the bank angle θ and other data (e.g., vehicle speed V) are linked to the coordinate data 12, the data on the points of the coordinate data 12 shown in Figs. 2 and 3 can be extracted. In addition, it is also preferable that the controller 20 has the function of classifying the curve curvature into multiple groups and storing the left and right bank angles and other data (e.g., vehicle speed V) for each group, as shown in Figs. 4 and 5. When data in which the bank angle θ is linked to the coordinate data 12 can be produced, the following arbitrary process can be performed by another data processing unit (e.g., PC). Accordingly, the controller 20 may have only necessary functions.

According to the method for storing motorcycle driving information of this embodiment, the coordinate data of a motorcycle is acquired (S10), then the left and right bank angles θ of the motorcycle are calculated (S20), and then the coordinate data and the left and right bank angles θ are linked and stored (S30). Accordingly, appropriate bank angles for supporting motorcycle driving can be stored. In other words, since not only the bank angles θ are stored but linked coordinate data and bank angles θ are stored, data including other conditions such as curve curvature can easily be stored. This allows acquisition of data on bank angles appropriate to the skill of the rider and providing it to the rider.

Furthermore, when the drive map 10 including the motorcycle driving route 14 is produced using the coordinate data 12 acquired by the coordinate determination unit 22 and the curve curvature 18 of the driving route is calculated from the drive map 10, appropriate bank angles can be stored on the basis of curve curvature suitable for motorcycle driving. For this reason, not only more accurate curvature for motorcycles can be acquired than that calculated from existing map data but also useful data on curve curvature can be calculated by motorcycles and stored even for areas having no map data (e.g., mountain paths, river-beds, small race circuits).

In this embodiment, also the slope information 19 (refer to Fig. 3) can be linked to the coordinate data 12. Particularly, downward-slope information is one of useful information for riders (specifically, a downward slope increases the speed to make a difficult curve), so that the linkage between the downward-slope information and the coordinate data 12 has a significant technical meaning.

Referring now to Figs. 7 and 8, the structure of the embodiment will be specifically described. Fig. 7 is a schematic diagram of an example of a motorcycle 200 including the motorcycle driving-information storing system according to the embodiment. Fig. 8 is a block diagram of an example of a motorcycle driving-information storing system 100 according to the embodiment.

The motorcycle 200 shown in Fig. 7 is a scooter motorcycle and includes a front wheel 202, a rear wheel 203, a handle 204, a screen 205, a unit swing engine 206 serving as primary drive, and a seat 207. A rider who wears a helmet 208 rides on the seat 207. In this embodiment, a scooter motorcycle is used as the motorcycle 200 by way of example. However, it is not limited to the scooter type but other motorcycles may be used. The "motorcycle" in this specification means a vehicle that can turn while banking the vehicle body. Accordingly, vehicles in which at least one of the front wheel and the rear wheel has two wheels or more, three-wheel or four-wheel (or more) vehicles in number of tires are also included in "motorcycle" and their bank angle θ can be determined or calculated.

The motorcycle 200 includes an electronic control unit (ECU) 120 serving as the controller 20 of the motorcycle driving-information storing system 100 of this embodiment and a GPS receiver 122 serving as the coordinate determination unit 22.

The motorcycle 200 also includes an antenna 209, a dedicated short-range communication (DSRC) antenna 210, a detector 212, a DSRC receiver 213, an audio visual circuit 215, a display 216, and a transmitter 217.

The antenna 209 receives a signal from a road-side marker 218 placed on a road and is electrically connected to the DSRC receiver 213 via the detector 212 mounted at the rear of the vehicle body. The DSRC antenna 210 receives a signal from a DSRC road-side antenna 219 mounted to a pole etc. and is connected to the DSRC receiver 213.

The DSRC receiver 213 and the GPS receiver 122 are electrically connected to the ECU 120. As has been described above, the controller 20 of the motorcycle driving-information storing system 100 of the embodiment can be operated by the ECU 120. The ECU 120 connects also to the audio visual circuit 215 mounted at the front of the vehicle body. The ECU 120 connects to on-vehicle sensors for sensing the driving condition of the motorcycle 200 (for example, a speed sensor for detecting the engine RPM, a throttle position sensor for determining the opening of a throttle valve, a brake sensor for sensing the opening of a brake lever, and a yaw-rate sensor for sensing the angle of inclination of the vehicle body), and to an on-vehicle navigation system 220.

The audio visual circuit 215 connects to the display 216 and the transmitter 217 which are disposed at the front of the vehicle along with various meters. The helmet 208 includes a voice receiver 222 and left and right built-in speakers 224 connected to the voice receiver 222.

As has been described, the ECU 120 can acquire the positional information on the motorcycle 200 with the GPS receiver 122. In the structure of Fig. 7, the motorcycle 200 also has the function of DSRC and so, can also acquire road information. A brief description thereof will be given here.

When the scooter motorcycle 200 passes through the road-side marker 218, the antenna 209 receives a signal from the road-side marker 218 and transmits it to the DSRC receiver 213 via the detector 212. The DSRC receiver 213 then outputs the signal to the ECU 120. The signal transmitted from the road-side marker 218 notifies the ECU 120 of positions to start and end to provide road information. Upon detecting the start of the information provision, the ECU 120 receives various road information transmitted from the DSRC road-side antenna 219. The signals indicative of the presence of crossings, crosswalks, curves, slopes, etc., which are transmitted from the DSRC road-side antenna 219, are received by the DSRC antenna 210 and sent to the DSRC receiver 213 and then the various road information are inputted from the DSRC receiver 213 to the ECU 120.

The ECU 120 acquires the driving characteristics of the vehicle which correspond to the progress of driving from the information (positional information) inputted from the GPS receiver, the road information inputted from the DSRC receiver 213, or the vehicle driving condition detected by the navigation system 220 to produce a memory map and sets and stores them in the memory of the ECU.

In the example of Fig. 8, the ECU 120 includes a data processor 30, a memory 32, and a display processing unit 34. To the data processor 30 in the ECU 120, detection signals from a sensor 42 and route-, road-, and position-signals from GPS or DSRC 44 are inputted. The results of processing by the data processor 30 are set and stored in the memory 32 as a memory map. The sensor 42 and the GPS 44 in Fig. 8 correspond to the sensor 24 and the coordinate determination unit 22 in Fig. 6, respectively; while the data processor 30 and the memory 32 in the ECU 120 correspond to the controller 20 and the storage section 26 in Fig. 6, respectively.

The data in the memory 32 is processed by the display processing unit 34 and displayed on the display 216 or is subjected to voice processing and outputted to voice output means 224 of the helmet 208. Figs. 2 to 5 show display examples of the data in the memory 32. The data processor 30 may have the function of display processing or voice processing.

The data processor 30 may be connected to various set switches 46. The data processor 30 can also be connected to external memories 48 (a CD-ROM, a CD-RW, a flash memory, Compact Flash (registered trademark), a server or database connectable via communication means).

The system including the ECU 120 can produce a data library. In other words, the system can store motorcycle driving information. The data processor 30 samples various data from the sensor 42 every unit time (for example, every 100 msec) and, from the sampled values, the data processor 30 acquires vehicle driving characteristics including bank angles, vehicle speed, and acceleration and deceleration points in real time or after driving and stores them in the memory 32. The bank angle, the acceleration or deceleration point, the vehicle speed, the acceleration value, and the deceleration value are stored at every predetermined intervals of the carriage way (coordinate data) of the vehicle driving route. The positional information on the vehicle is acquired from the GPS 44 (122). By superimposing it on the map data of the navigation system 220, a memory map (library) can be acquired in which vehicle drive characteristics corresponding to the route are recorded.

In this embodiment, vehicle driving characteristics are determined for each corner curvature of the route. Specifically, the bank angle limit (optimum bank angle), the acceleration and deceleration values, the speed limit (optimum speed), and the positions of acceleration and deceleration at a corner (R < 100) at address XXX of express-way YYY are set in the memory map. The bank limit is defined on the assumption that motorcycle riders intend to turn a corner with their best driving technique. Thus, it may be rephrased by an optimum bank angle. The same applies to the speed limit.

The memory map is stored in the memory 32 of the ECU 120 or in an external memory 48. When the results of redriving through the identical route, such as the bank angle limit (optimum bank angle), exceed the values of preceding driving, the stored values can be updated to the values of the following driving. When the external memory 48 is a driving support center equipped with a server, the driving value limit (optimum value) of each of multiple drivers can be registered therein. The driving support center can provide riders with various services. For example, the driving support center can provide drivers with the limit values (optimum values) of a highest-level rider. The driving support center can also correct the limit values (optimum values) according to weather, the condition of the road surface, and the state of traffic jam, and transmit the corrected values to drivers. The driving support center can also transmit physical limit values (optimum values) to drivers, which are determined from the curvature of the corners of the route or the structure of the motorcycle.

Fig. 9 is a block diagram of the structure of the embodiment in Figs. 7 and 8. The structural example of Fig. 9 includes a GPS-data record switch 46a, a vehicle-information write switch 46b, and a setting change switch 46c as the set switch 46 and includes a yaw-rate sensor 42a and various sensors 42b such as a vehicle-speed sensor as the sensor 42. Fig. 9 also shows a power source 50, a CCD camera (imaging device)/microphone input section 54, and an audio-visual (AV) output section 56. The audio visual circuit 215 and the display processing unit 34 in Fig. 8 may be an identical unit.

The structure of Fig. 9 may be replaced with the structure of Fig. 10, because the DSRC antenna 210 is not particularly required to establish the link between the bank angle θ and the coordinate data. In addition, the CCD camera (or another imaging device such as a CMOS image sensor) 54, the microphone input section 54, and voice transmitter and receiver 217 and 222 are available as options. The voice transmitter and receiver 217 and 222 may be bidirectional to allow the voice from riders to be stored as data.

The data shown in Fig. 3, bank angle data, and acceleration data can also be stored in an integrated manner. Fig. 11 shows a display example of the integrated data. The display example of Fig. 11 shows a map information window 11 in which a vehicle position 17, the driving route 14, the bearing mark 15, etc. are shown, a bank angle indication 60, and an acceleration and deceleration indication 62. In addition, a curve icon 64 is also shown. Of course, vehicle speed can also be displayed.

When the measurement data is stored in an integrated manner in the form of numerical value, graph, or chart, the relationship among the information can be viewed at a glance. Thus, riders can be given information suitable for supporting motorcycle driving.

A combination of the data shown in Fig. 11 and image data (imaged data) during driving can be stored. Fig. 12 shows a display example in which a camera window 66 which displays image data during driving, imaged by the CCD camera 54 in Figs. 9 and 10, and the map information window 11, etc. are combined. The image data during driving is not limited to motion picture data, but may be still image data. In the example of Fig. 12, the bank angle indication 60 and the acceleration and deceleration indication 62, in addition to speed display, are expressed as a simplified notation 68.

When image data (66) during driving is linked to the coordinated data (or processed coordinate data) and the bank angle (and information such as vehicle speed), as has been described above, a combination of an image during driving and the numerical values, graph, and chart of measurement data can be provided to riders, thus improving the quality of information for supporting motorcycle driving. The provision of image during driving gives riders more useful and intuitive information than only the values etc.

The stored data shown in Figs. 11 and 12 can be distributed to the Internet via communication means in real time. Particularly, when driving images are distributed in real time, stored data with more realistic sensations can be provided.

The switches of the motorcycle driving-information storing system (or the motorcycle driving-information acquisition system) can be arranged as shown in Fig. 13. Fig. 13 is a structural diagram of the periphery of a handle and a monitor as viewed from a rider. In the example of Fig. 13, a display (monitor) 216 is disposed at the back of the handle 204. Around the display 216, a screen (wind-break screen) 205 and side mirrors 232 are mounted. Below the display 216, the GPS-data record switch 46a and the vehicle-information write switch (vehicle-information data acquisition switch to turn on/off the drive recorder function)) 46b are provided, around which a main switch 230 for turning on/off an engine is also disposed.

The display (monitor) 216 may have the structure shown in Fig. 14 (a). The display 216 is constructed as a meter unit 240, which includes a liquid crystal display 216, a speedometer 242, and a fuel gauge and oil temperature sensor 244. The liquid crystal display 216 may be other image displays such as an organic EL display. A button switch 252 is disposed around the liquid crystal display 216. The switch 252 may include, for example, a menu scroll switch 252a, a rider 1/2 selection switch/curve service on/off switch 252b, an audio-mode changeover switch 252c, a road-surface selection switch 252d, a data display/decision switch 252e.

The example of Fig. 14 (a) includes a shade 250 which covers the liquid crystal display 216. Fig. 15 shows it in schematic perspective view. The shade 250 is movable as shown in Fig. 14 (b) ; when the shade 250 is pushed in the direction of an arrow 251, it rotates around a rotation center 258 to cover the display screen of the liquid crystal display 216. The shade 250 is fixed or opened with a notch 253a, a spring 254, and a stopper 256. A notch 253b is used to hold the shade 250 at a midpoint.

Since the meter display of motorcycles is exposed directly, the point of view varies depending on the height of the rider and, with a general meter cowl (meter cover), the range that blocks off the sunlight is narrow, thus often making it difficult to view display contents in the liquid crystal display when light falls on the surface. The liquid crystal display 216 of this embodiment has the shade 250 therearound, reducing the difficulty in viewing. The shade (display cover) 250 of this embodiment can effectively prevent the lateral incidence of the sunlight.

The stopper 256 of this embodiment has the function of locking the shade 250 when the shade 250 is closed and, for example, operatively associating the shade 250 with the turn of the main switch 230. Briefly, the shade 250 can be locked and unlocked with the same mechanism as that of a seat lock. The linkage of the shade 250 with the main switch 230 also offers the function of protecting against tampering with the liquid crystal display.

The data acquired by the driving-information storage method of the embodiment can be provided to riders, as shown in Figs. 16 to 19, for example.

Fig. 16 is a diagram in which left and right bank angles superimposed on the image of a carriage way are displayed continuously. A line 150 is the driving route (carriage way) of the motorcycle; a line 152 indicates a change in the bank angle of the rider 1; and line 154 indicates a change in the bank angle of the rider 2. The coordinate difference between the change curve of the bank angle and the direction of the driving route corresponds to the size of the bank angle. The orientation of the bank angle is determined depending on which side of the left and right the width is located on.

Such display can offer riders easy-to-view information on the bank angles and the curve (driving route), thus having a significant technical meaning. When the vehicle drives through an identical carriage way, the data on the bank angles may be sequentially updated in memory or, alternatively, the data on the bank angles at each drive date and time may be set in the memory.

Fig. 17 shows an image in which vehicle speed is superimposed on the carriage way of a vehicle, in place of the bank angles. In the image of Fig. 17, the difference between a speed change graph 156 and a driving route 150 corresponds to vehicle speed. Also the display can offer riders easy-to-view information on the vehicle speed and the driving route, thus having a significant meaning in technical point of view.

Riders can display the results of the present driving including the accuracy of the driving, the level of skill, or characteristics on the screen after driving by bringing the display into a drive-result display mode (the display in Fig. 16 and/or 17). At that time, when the past drive results are displayed such that they are superimposed on the results of the present driving, the degree of improvement in driving can be recognized. When the carriage way is superimposed on map data, the drive results can be displayed such that they are superimposed on the screen of a navigation system. Also, limit value data (optimum-value data) of the route can be checked before driving.

Fig. 18 shows another display pattern, in which a course is specified and the drive characteristics (limit values of driving) of the course are expressed in figures. The rider 1 and the rider 2 may be displayed in different colors to facilitate discrimination. The rider 1 and the rider 2 may either be different or identical. The figures may either be read from a memory in the vehicle or from an external memory. Fig. 19 compares the standard values (the maximum values) and the data on the rider 1. This allows the rider's limit values to be compared to the standard values.

Figs. 4 and 5 show yet other display patterns. The data processor (e.g., refer to numeral 30 in Fig. 8) reads limit values of each rider and corner curvature from a memory map and displays them on a display via a data-display processor. Bank angles are calculated using curve curvature R from the foregoing characteristic expression. The acceleration and deceleration are calculated from the vehicle speed. The curve curvature can also be calculated from a navigation GPS data map.

Various parameters in displaying data can be set as shown in Fig. 20, for example. A screen 70 is an example of a touch panel. The "display" in the screen 70 is a button for displaying data (corresponding to Fig. 18, for example) and the "set" is a button for setting parameters for correcting limit values (optimum values) registered in the memory map.

When the display button is pushed, a display screen 71, for example, is displayed on the display. On the other hand, when the set button is pushed, a screen 72 is first displayed, in which it is determined whether a single sound "beep" or a voice "a left-hand curve is present" is selected.

When a "next" button is then pushed, a screen 74 is displayed in which setting for two riders is allowed, where the "rider 2" can also be set to tandem. Then a screen 76 is displayed, where a road-surface set parameter can be selected. For example, the parameter can be set depending on road conditions such as on-road/off-road or dry/wet. The parameters also include time elements such as day/night and twilight.

A screen 78 is then displayed, in which it is selected whether data is rewritten to limit values corrected by the parameters or cleared. The correction parameters include the depth of a curve, tire air pressure, temperature, downgrade, and presence of freezing, etc.

The memory map is updated as follows:

When driving a motorcycle, the rider displays the above-described screen on the display. The rider then performs necessary settings and starts the motorcycle. Then a navigation screen is displayed, in which the present bank angles are calculated and left and right bank angles are displayed on the map screen. Fig. 11 shows an example of the screen at that time, in which the driving position, bank angles, curvature radius, gradient, the direction of a curve (curve icon), acceleration/deceleration, etc. are displayed along with map information.

When the present motorcycle driving position is close to that of the limit value map, the map is displayed, in which the present values are displayed. The distance and arrival time to the starting point of a curve closest to the present position in the direction of driving are calculated from the curve on the map, wherein when the arrival time is within several seconds, the icon of the curve is displayed on the display to notify the driver of the arrival of the curve. A speed limit (optimum value) is read from the map, which is multiplied by a correction factor such as the depth of the curve, as necessary.

The speed limit and the actual measured value are then compared, wherein when the measured value exceeds the speed limit, the driver is notified of it by the flashing of the icon or voice information. The data processing means reads limit values (bank angles etc.) at the curvature radius R of the road from the map data in the work RAM of the memory, wherein when the actual measured values exceed the limit values, it updates the limit value table in the work RAM.

When the vehicle has reached the end of the map, the data processing means writes the data in the work memory of the ECU onto the table of an external memory. When either a condition that the vehicle has stopped for more than several minutes or a condition that the vehicle has passed through the end by ten meters or more is satisfied, the write operation is performed. On the other hand, the condition is not satisfied, the measurement of the limit values is continued. This prevents the sampling from being finished partway through a curve.

When the actual measured vehicle speed is lower than the speed limit, the external memory is not updated, because the measured vehicle speed does not exceed the speed limit. Even if the actual measured speed has exceeded the speed limit, the external memory is not updated, unless the bank angle has exceeded the bank angle limit.

The data processing means can execute processes of giving a rider various warnings and advance notices by using the limit values on the memory map. For example, it compares the limit values registered for the route with the actual measured values and gives a notification that the measured values come close to the limit values and, when the limit values are lower than theoretical limit values, it notifies the driver of the fact that driving at a bank angle and a speed higher than the measured values is possible. For an untraveled route, it is also possible to obtain the curvature of a corner from the navigation map data and to temporarily set the limit values with the same curvature on the data map for the untraveled route.

The map data may also be edited with a personal computer etc. and registered in an external memory. Also, a necessary memory map can be downloaded on the controller of a motorcycle by accessing the home page of the drive support center via the Internet.

Referring to Figs. 21 to 23, a flow including the method for storing motorcycle driving information of the embodiment will be described.

Fig. 21 is a flowchart for explaining the outline of the flow. Figs. 22 and 23 are the details of the flowchart of Fig. 21.

After starting the flow (START), parameters are set first (S100). In the parameter setting, parameters of the rider, the road surface, etc. are set using the touch panel or button switch, as described above. To write vehicle data (S110), measurement values by the various sensors mounted to the vehicle are acquired and the acquired data is written (S111).To acquire map data (S120), data for GPS curve service is acquired to produce map data based on the GPS data (S121). Finally, to perform curve service (S130), the foregoing curve support service is provided (S131). After the driving has been completed or the service has been stopped at will, the flow is completed (END).

The detailed example of Figs. 22 and 23 will now be described.

As shown in Fig. 22, after starting the flow (START), parameters are read first (S200), where parameters of the rider, the road surface, the kind of voice are read. Then the limit values (optimum values) of the rider are read from an external memory medium (S210). For example, the tables shown in Figs. 4 and 5 are read. The table also includes speed limit (Vmax) data. The reading from the external memory medium may be performed via communication.

Then, tire air pressure/temperature and air temperature are determined (S220), by which a tire correction factor and an air-temperature correction factor are determined. For example, in the case of tire air pressure P1 < 90 kPa, or temperature t1 < 20°C or t1 ≥ 80°C, a tire correction factor of 90 percent (generally, 100 percent) is determined. Alternatively, the condition of freezing is determined, wherein at 0°C or lower, 80 percent (generally 100 percent) is set as temperature freezing correction data.

Furthermore, present vehicle speed V1 is determined (S221) and then GPS longitude x and latitude y are determined (S222). A road linear map closest to the present position is extracted (S223) and the bank angle and the acceleration are calculated and displayed (S230). It is then determined whether the present position is close to a region on the map depending on whether the present position is within a specified distance (e.g., ten meters) from a line that connects nodes on the map or from the curve (S240), wherein when it is close to the region on the map, the map is displayed to show the present position (S241)

The distance and arrival time from curves R1 to Rn on the map to the starting point of a curve closest to the present position in the direction of driving are calculated (S242), where it is determined whether the arrival time is within a specified time (e.g., within before five seconds) (S250), wherein when a positive determination is made, a curve icon is displayed (5260). Then V2 is calculated by multiplying Vmax by a correction factor (S270). The correction factor includes, e.g., curve-depth correction (C2), tire correction (C3), downward slope correction (C4), and air temperature correction (C5). For the curve-depth correction (C2) other than the tire correction (C3) and the air-temperature correction (C4), when the depth of the curve is ≤ 45°, the correction factor can be set at 100 percent; when the curve depth is ≤ 90°, ≤ 135°, and 135 <, the correction factor can be set at 95 percent, 90 percent, and 80 percent, respectively. On the other hand, for the downward slope correction (C4), when the downward slop is five percent or more, the correction factor can be set at 95 percent (generally 100 percent).

Then, as shown in Fig. 23, corrected speed limit V2 and the present speed limit V1 are compared (S300). When V2 < V1, the rider is notified of it by flashing of an icon or voice information (S310). Then limit values (optimum values) in service which are present in a temporary memory are extracted (S320) . Then it is determined whether the limit values exceed the measured values (S330), wherein when they exceed (yes), the limit-value table in the temporary memory is updated (S340) . The temporary memory denotes a memory which is rewritten as appropriate.

After the limit-value table has been updated (5340) and when a negative decision is made in S300 and S330, it is determined whether the vehicle has reached the terminal of the map (S350) . When it has not reached, it is determined whether the vehicle stops at a speed of zero for more than five minutes or it is apart ten meters or more from the map (S360). If the determination is "Yes" in S350 and S360, acquired limit-value data is written to the table of the external memory (S370). After the step S370 and when the determination is "No" in S360, the routine can be started again from the position "B" in Fig. 22. Symbols "A", "B", and "C" in Figs. 22 and 23 can be skipped to one another.

### [Industrial Applicability]

The present invention can provide a method for storing motorcycle driving information capable of storing appropriate bank angles to support motorcycle driving.

## Claims

1. Method for storing motorcycle driving information, comprising the steps of
(a) acquiring motorcycle coordinate data;
(b) calculating left and right bank angles of a vehicle body of the motorcycle; and
(c) linking the coordinate data with the left and right bank angles of the vehicle body and storing the linked data.

2. Method for storing motorcycle driving information according to claim 1, wherein step (a) is performed using a global positioning system (GPS).

3. Method for storing motorcycle driving information according to claim 1 or 2, wherein step (a) further comprises a step of producing a drive map including a driving route of the motorcycle using the acquired coordinate data; and a step of calculating a curve curvature of the driving route from the drive map.

4. Method for storing motorcycle driving information according to claim 3, further comprising an additional step of classifying the curve curvature into a plurality of groups, wherein step (c) comprises the step of storing the left and right bank angles linked to each of the groups of the curve curvature.

5. Method for storing motorcycle driving information according to claim 4, wherein the curve curvature is classified into groups in a unit of a curve curvature of 50 meters.

6. Method for storing motorcycle driving information according to claim 4 or 5, wherein the left and right bank angles are stored such that the left bank angle and the right bank angle are separately linked to each of the groups of the curve curvature.

7. Method for storing motorcycle driving information according to one of the claims 1 to 6, wherein step (c) comprises the additional step of linking vehicle speed, and/or acceleration of the motorcycle and/or deceleration of the motorcycle, and/or a slope of the driving route, with coordinate data and storing this linked data, in addition to the left and right bank angles.

8. Method for storing motorcycle driving information according to one of the claims 1 to 7, wherein steps (a) to (c) are performed independently for each of different riders.

9. Method for storing motorcycle driving information according to claim 8, wherein the different riders include a single first rider and the first rider who rides double on the motorcycle.

10. Method for storing motorcycle driving information according to one of the claims 1 to 9, wherein steps (a) to (c) are performed for each of different road surfaces.

11. Method for storing motorcycle driving information according to one of the claims 1 to 10, wherein the coordinate data and the bank angles are stored at specified time intervals.

12. Method for storing motorcycle driving information according to one of the claim 1 to 11, further comprising the step of storing image data during motorcycle driving by using an imaging device.

13. Device for storing motorcycle driving information, comprising:
a coordinate determination unit for acquiring coordinate data of a motorcycle;
a sensor for determining the left and right bank angles of a vehicle body of the motorcycle;
a controller connected to the coordinate determination unit and the sensor; and
a storage section for storing data processed by the controller,
wherein the controller has:
a function of calculating left and light bank angles of a vehicle body on the basis of the information from the sensor; and
a function of outputting the left and right bank angles of the vehicle body linked to the coordinate data of the motorcycle acquired by the coordinate determination unit to the storage section.

14. Device for storing motorcycle driving information according to claim 13, wherein the coordinate determination unit is a GPS receiver for receiving a GPS signal.

15. Device for storing motorcycle driving information according to claim 13 or 14, wherein the controller comprises a function of producing a drive map including the driving route of the motorcycle using the coordinate data; and a function of calculating the curve curvature of the driving route from the drive map.

16. Device for storing motorcycle driving information according to one of the claim 13 to 15, wherein the sensor includes a vehicle-speed sensor and a yaw-rate sensor.

17. Motorcycle comprising the device for storing motorcycle driving information according to one of the claims 13 to 16.

18. Motorcycle according to claim 17, further comprising an imaging device connected to the controller.

## Patentansprüche

1. Verfahren zum Speichern von Motorrad- Fahrinformationen, aufweisend die Schritte von
(a) Erlangen von Motorrad- Koordinatendaten;
(b) Berechnen des linken und rechten Neigungswinkels einer Fahrzeugkarosserie des Motorrades; und
(c) Verbinden der Koordinatendaten mit dem linken und rechten Neigungswinkel der Fahrzeugkarosserie und Speichern der verbundenen Daten.

2. Verfahren zum Speichern von Motorrad- Fahrinformationen nach Anspruch 1, wobei der Schritt (a) unter Verwendung eines globalen Positionierungssystems (GPS) ausgeführt wird.

3. Verfahren zum Speichern von Motorrad- Fahrinformationen nach Anspruch 1 oder 2, wobei der Schritt (a) außerdem einen Schritt zum Erzeugen eines Fahrplanes aufweist, der eine Fahrtroute des Motorrades unter Verwendung der erlangten Koordinatendaten und einen Berechnungsschritt einer Kurvenkrümmung der Fahrtroute aus dem Fahrplan enthält.

4. Verfahren zum Speichern von Motorrad- Fahrinformationen nach Anspruch 3, außerdem aufweisend einen zusätzlichen Schritt des Klassifizierens der Kurvenkrümmung in eine Mehrzahl von Gruppen, wobei Schritt (c) den Speicherschritt des linken und rechten Neigungswinkels, verbunden mit jeder der Gruppen der Kurvenkrümmung, aufweist.

5. Verfahren zum Speichern von Motorrad- Fahrinformationen nach Anspruch 4, wobei die Kurvenkrümmung in Gruppen in einer Einheit einer Kurvenkrümmung von 50 Metern klassifiziert wird.

6. Verfahren zum Speichern von Motorrad- Fahrinformationen nach Anspruch 4 oder 5, wobei der linke und rechte Neigungswinkel derart gespeichert werden, dass der linke und rechte Neigungswinkel getrennt mit jeder der Gruppen der Kurvenkrümmung verbunden werden.

7. Verfahren zum Speichern von Motorrad- Fahrinformationen nach einem der Ansprüche 1 bis 6, wobei Schritt (c) aufweist den zusätzlichen Schritt des Verbindung von Fahrzeuggeschwindigkeit und / oder Beschleunigung des Motorrades und / oder des Abbremsens des Motorrades und / oder einer Neigung der Fahrtroute mit den Koordinatendaten und Speichern dieser verbundenen Daten zusätzlich zu dem linken und rechten Neigungswinkel.

8. Verfahren zum Speichern von Motorrad- Fahrinformationen nach einem der Ansprüche 1 bis 6, wobei die Schritte (a) bis (c) für jeden von verschiedenen Fahrern unabhängig ausgeführt werden.

9. Verfahren zum Speichern von Motorrad- Fahrinformationen nach Anspruch 8, wobei die verschiedenen Fahrer einen einzelnen ersten Fahrer und den ersten Fahrer enthalten, der zu zweit auf dem Motorrad fährt.

10. Verfahren zum Speichern von Motorrad- Fahrinformationen nach einem der Ansprüche 1 bis 9, wobei die Schritte (a) bis (c) für jede von verschiedenen Straßenoberflächen ausgeführt werden.

11. Verfahren zum Speichern von Motorrad- Fahrinformationen nach einem der Ansprüche 1 bis 10, wobei die Koordinatendaten und die Neigungswinkel zu bestimmten Zeitabständen gespeichert werden.

12. Verfahren zum Speichern von Motorrad- Fahrinformationen nach einem der Ansprüche 1 bis 11, außerdem aufweisend den Schritt der Speicherung von Bilddaten während der Motorradfahrt unter Verwendung einer Abbildungsvorrichtung.

13. Vorrichtung zum Speichern von Motorrad- Fahrinformation, aufweisend:
eine Koordinatenbestimmungseinheit zum Erlangen von Koordinatendaten eines Motorrades;
einen Sensor zum Bestimmen des linken und rechten Neigungswinkels einer Fahrzeugkarosserie des Motorrades;
eine Steuerung, verbunden mit der Koordinatenbestimmungseinheit und dem Sensor; und einen Speicherschritt zum Speichern von Daten verarbeitet durch die Steuerung,
wobei die Steuerung hat:
eine Funktion des Berechnens des linken und rechten Neigungswinkels einer Fahrzeugkarosserie auf der Grundlage der Information von dem Sensor; und
eine Funktion zum Ausgeben des linken und rechten Neigungswinkels der Fahrzeugkarosserie, verbunden mit den Koordinatendaten des Motorrades, erlangt durch die Koordinatenbestimmungseinheit an den Speicherabschnitt.

14. Vorrichtung zum Speichern von Motorrad- Fahrinformationen nach Anspruch 13, wobei die Koordinatenbestimmungseinheit ein GPS- Empfänger zum Empfangen eines GPS- Signals ist.

15. Vorrichtung zum Speichern von Motorrad- Fahrinformationen nach Anspruch 13 oder 14, wobei die Steuerung eine Funktion zum Herstellen eines Fahrplanes aufweist, der die Fahrtroute des Motorrades unter Verwendung der Koordinatendaten des Motorrades und eine Berechnungsfunktion der Kurvenkrümmung der Fahrtroute aus dem Fahrplan enthält.

16. Vorrichtung zum Speichern von Motorrad- Fahrinformationen nach einem der Ansprüche 13 bis 15, wobei der Sensor eine Fahrzeuggeschwindigkeitssensor und einen Gierratensensor enthält.

17. Motorrad, aufweisend die Vorrichtung zum Speichern der Motorrad- Fahrinformationen nach einem der Ansprüche 13 bis 16.

18. Motorrad nach Anspruch 17, außerdem aufweisend eine mit der Steuerung verbundene Abbildungsvorrichtung.

## Revendications

1. Procédé pour mettre en mémoire des informations de conduite de motocycle, comprenant les étapes qui consistent
(a) à acquérir des données de coordonnées de motocycle ;
(b) à calculer des angles d'inclinaison gauche et droit d'un corps de véhicule du motocycle ; et
(c) à lier les données de coordonnées des angles d'inclinaison gauche et droit du corps de véhicule et à mettre en mémoire les données liées.

2. Procédé pour mettre en mémoire des informations de conduite de motocycle selon la revendication 1, selon lequel l'étape (a) est exécutée à l'aide d'un système de localisation (GPS).

3. Procédé pour mettre en mémoire des informations de conduite de motocycle selon la revendication 1 ou 2, selon lequel l'étape (a) comprend par ailleurs une étape qui consiste à produire une carte de circulation comprenant un itinéraire du motocycle à l'aide des données de coordonnées acquises, et une étape qui consiste à calculer une courbe de virage de l'itinéraire à partir de la carte de circulation.

4. Procédé pour mettre en mémoire des informations de conduite de motocycle selon la revendication 3, comprenant par ailleurs une étape supplémentaire qui consiste à classer la courbe de virage en plusieurs groupes, l'étape (c) comprenant l'étape qui consiste à mettre en mémoire les angles d'inclinaison gauche et droit liés à chacun des groupes de la courbe de virage.

5. Procédé pour mettre en mémoire des informations de conduite de motocycle selon la revendication 4, selon lequel la courbe de virage est classée en groupes dans une unité d'une courbe de virage de 50 mètres.

6. Procédé pour mettre en mémoire des informations de conduite de motocycle selon la revendication 4 ou 5, selon lequel les angles d'inclinaison gauche et droit sont mis en mémoire de telle sorte que l'angle d'inclinaison gauche et l'angle d'inclinaison droit soient liés séparément à chacun des groupes de la courbe de virage.

7. Procédé pour mettre en mémoire des informations de conduite de motocycle selon l'une des revendications 1 à 6, selon lequel l'étape (c) comprend l'étape supplémentaire qui consiste à lier la vitesse du véhicule et/ou l'accélération du motocycle et/ou la décélération du motocycle et/ou une pente de l'itinéraire à des données de coordonnées, et à mettre en mémoire ces données liées, en plus des angles d'inclinaison gauche et droit.

8. Procédé pour mettre en mémoire des informations de conduite de motocycle selon l'une des revendications 1 à 7, selon lequel les étapes (a) à (c) sont exécutées indépendamment pour chacun des différents motocyclistes.

9. Procédé pour mettre en mémoire des informations de conduite de motocycle selon la revendication 8, selon lequel les différents motocyclistes comprennent un premier motocycliste seul et le premier motocycliste qui circule avec un passager sur le motocycle.

10. Procédé pour mettre en mémoire des informations de conduite de motocycle selon l'une des revendications 1 à 9, selon lequel les étapes (a) à (c) sont exécutées pour chaque surface de chaussée différente.

11. Procédé pour mettre en mémoire des informations de conduite de motocycle selon l'une des revendications 1 à 10, selon lequel les données de coordonnées et les angles d'inclinaison sont mis en mémoire suivant des intervalles de temps spécifiés.

12. Procédé pour mettre en mémoire des informations de conduite de motocycle selon l'une des revendications 1 à 11, comprenant par ailleurs l'étape qui consiste à mettre en mémoire des données d'image pendant la circulation du motocycle en utilisant un dispositif d'enregistrement d'image.

13. Dispositif pour mettre en mémoire des informations de conduite de motocycle, comprenant :
une unité de détermination de coordonnées pour acquérir des données de coordonnées d'un motocycle ;
un capteur pour déterminer les angles d'inclinaison gauche et droit d'un corps de véhicule du motocycle ;
un régulateur connecté à l'unité de détermination de coordonnées et au capteur ; et
une section de mise en mémoire pour mettre en mémoire des données traitées par le régulateur,
le régulateur ayant :
une fonction de calcul d'angles d'inclinaison gauche et droit d'un corps de véhicule sur la base des informations provenant du capteur ; et
une fonction de sortie, vers la section de mise en mémoire, des angles d'inclinaison gauche et droit du corps de véhicule liés aux données de coordonnées du motocycle acquises par l'unité de détermination de coordonnées.

14. Dispositif pour mettre en mémoire des informations de conduite de motocycle selon la revendication 13, dans lequel l'unité de détermination de coordonnées est constituée par un récepteur GPS pour recevoir un signal GPS.

15. Dispositif pour mettre en mémoire des informations de conduite de motocycle selon la revendication 13 ou 14, dans lequel le régulateur comprend une fonction de production d'une carte de circulation contenant l'itinéraire du motocycle à l'aide des données de coordonnées, et une fonction de calcul de la courbe de virage de l'itinéraire à partir de la carte de circulation.

16. Dispositif pour mettre en mémoire des informations de conduite de motocycle selon l'une des revendications 13 à 15, dans lequel le capteur comprend un capteur de vitesse de véhicule et un capteur de vitesse de lacet.

17. Motocycle comprenant le dispositif pour mettre en mémoire des informations de conduite de motocycle selon l'une des revendications 13 à 16.

18. Motocycle selon la revendication 17, comprenant par ailleurs un dispositif d'enregistrement d'image relié au régulateur.
